# EUROPÄISCHE PATENTSCHRIFT

(11) **EP 2 185 409 B1**
(45) Veröffentlichungstag und Bekanntmachung des Hinweises auf die Patenterteilung: **14.12.2011**
(21) Anmeldenummer: 08842524.4
(22) Anmeldetag: 22.10.2008
(51) Int. Cl.: B64C 1/06, B64D 11/00

(54) **FLUGZEUGKOMPONENTENMONTAGESYSTEM**
AIRCRAFT COMPONENT MOUNTING SYSTEM
SYSTEME DE MONTAGE D'ELEMENTS D'AVION

(30) Priorität: 22.10.2007 DE 102007050422; 22.10.2007 US 981536 P
(43) Veröffentlichungstag der Anmeldung: 19.05.2010
(73) Patentinhaber: Airbus Operations GmbH, 21129 Hamburg (DE)
(72) Erfinder: KÖFINGER, Christian, A-6330 Kufstein (AT); METZGER, Joachim, 89614 Öpfingen (DE); AUBURGER, Michael, 88416 Erlenmoos (DE)
(74) Vertreter: Schicker, Silvia
(86) Internationale Anmeldenummer: PCT/EP2008/008923
(87) Internationale Veröffentlichungsnummer: WO 2009/053040

(56) Entgegenhaltungen:
- EP-A- 1 803 645
- WO-A-2006/136804
- DE-A1-102006 034 862
- US-A- 3 142 461

## Beschreibung

Die Erfindung betrifft ein Flugzeugkomponentenmontagesystem zur Verwendung bei der Montage einer Interieurkomponente, einer Rohrleitung und/oder einer elektrischen Leitung in einem Flugzeug sowie ein Verfahren zur Montage einer Interieurkomponente, einer Rohrleitung und/oder einer elektrischen Leitung in einem Flugzeug.

Bei der Montage von Interieurkomponenten in einem Flugzeug ist es derzeit üblich, die verschiedenen Komponenten, wie z.B. Dadopaneele, Seitenverkleidungen, Deckenverkleidungen, Lichtbänder, Gepäckfächer und dergleichen einzeln mit der Flugzeugstruktur zu verbinden. Da jedes Bauteil separat positioniert und an der Flugzeugstruktur befestigt werden muss, ist die Montage der Interieurkomponenten häufig sehr zeitaufwendig. Darüber hinaus sind Änderungen der Position einzelner Interieurkomponenten oder Designänderungen an den Interieurbauteilen oft nur sehr schwierig realisierbar, da derartige Änderungen in der Regel eine Anpassung eines flugzeugstrukturseitigen Halters und/oder zumindest eine Anpassung der an der Flugzeugstruktur für die Montage der Interieurkomponenten vorgesehenen Befestigungspunkte erfordern.

In ähnlicher Weise werden derzeit auch beispielsweise als luftführende Leitungen einer Flugzeugklimaanlage oder der Wasserversorgung in einer Flugzeugkabine dienende Rohrleitungen sowie elektrische Leitungen in zeitaufwändiger Weise einzeln an der Flugzeugstruktur befestigt. Nach der Montage muss im Rahmen einer Endkontrolle die ordnungsgemäße Funktion aller Leitungen überprüft werden. Insbesondere müssen alle Rohrleitungen einer Dichtigkeitsprüfung unterzogen werden, während bei den elektrischen Leitungen eine Überprüfung aller Schnittstellen erforderlich ist. Auch bei den Rohrleitungen und den elektrischen Leitungen sind Positions- oder Designänderungen nur schwer realisierbar, da derartige Änderungen ebenfalls eine Anpassung eines flugzeugstrukturseitigen Halters und/oder zumindest eine Anpassung der an der Flugzeugstruktur für die Montage der Rohrleitungen und der elektrischen Leitungen vorgesehenen Befestigungspunkte erfordern. Darüber hinaus können Änderungen der Befestigungspunkte für die Rohrleitungen und/oder die elektrischen Leitungen an der Flugzeugstruktur Änderungen der Befestigungspunkte für die Interieurkomponenten an der Flugzeugstruktur nach sich ziehen und umgekehrt.

EP 1803645 A1, repräsentiert den nächstliegenden beannten Stand der Technik und zeigt ein modulares Flugzeugkomponentenmontagesystem und -verfahren.

Eine selbsttragende Strukturanordnung zu Montage von Interieurkomponenten in einem Flugzeug ist aus der nicht vor dem Prioritätstag der vorliegenden Anmeldung veröffentlichten WO 2008/043557 A1 bekannt.

Der Erfindung liegt die Aufgabe zugrunde, ein Flugzeugkomponentenmontagesystem zur Verwendung bei der Montage einer Interieurkomponente, einer Rohrleitung und/oder einer elektrischen Leitung in einem Flugzeug sowie ein Verfahren zur Montage einer Interieurkomponente, einer Rohrleitung und/oder einer elektrischen Leitung in einem Flugzeug bereitzustellen, die eine einfache und schnelle Montage der Interieurkomponente, der Rohrleitung und/oder der elektrischen Leitung in dem Flugzeug sowie eine vereinfachte Endkontrolle dieser Bauelemente ermöglichen.

Zur Lösung dieser Aufgabe umfasst ein erfindungsgemäßes Flugzeugkomponentenmontagesystem zur Verwendung bei der Montage einer Interieurkomponente, einer Rohrleitung und/oder einer elektrischen Leitung in einem Flugzeug mindestens ein bogenförmig ausgebildetes Rahmenelement. Das Rahmenelement kann einteilig oder mehrteilig ausgebildet sein. Beispielsweise kann das Rahmenelement zumindest abschnittsweise im Wesentlichen parallel zueinander angeordnete Längsstreben umfassen, die sich im in einem Flugzeug montierten Zustand des Rahmenelements im Wesentlichen parallel zu Spanten einer Flugzeugstruktur erstrecken. Die Längsstreben weisen daher vorzugsweise eine Krümmung auf, die im Wesentlichen an eine Krümmung der Spanten der Flugzeugstruktur angepasst ist. Vorzugsweise ist die Länge der Längsstreben so gewählt, dass das Rahmenelement im in einem Flugzeug montierten Zustand beide Seitenwände einer Flugzeugkabine sowie die Flugzeugkabinendecke überspannt. Wenn das Rahmenelement mehrteilig ausgeführt ist, können sich einzelne Abschnitte des Rahmenelements jeweils über entsprechende Abschnitte der Seitenwände und/oder der Decke der Flugzeugkabine erstrecken. Darüber hinaus kann das Rahmenelement eine geeignete Anzahl von sich zumindest abschnittsweise zwischen den Längsstreben erstreckenden Verbindungstreben umfassen, um eine ausreichende Steifigkeit des Rahmenelements zu gewährleisten. Das Rahmenelement besteht bevorzugt aus einem leichten und steifen Material, wie z.B. Aluminium, einer Aluminiumlegierung, GFK, CFK oder einem sonstigen Kohlefasermaterial. Das erfindungsgemäße Flugzeugkomponentenmontagesystem kann lediglich ein bogenförmig ausgebildetes Rahmenelement mit einer Mehrzahl von sich zumindest abschnittsweise im Wesentlichen parallel zueinander angeordneten Längsstreben umfassen. Alternativ dazu kann das erfindungsgemäße Flugzeugkomponentenmontagesystem jedoch auch mehrere separat voneinander ausgebildete Rahmenelemente umfassen.

Darüber hinaus umfasst das erfindungsgemäße Flugzeugkomponentenmontagesystem ein Verbindungselement, das sich zwischen einem ersten und einem zweiten Ende des Rahmenelements erstreckt und mit dem Rahmenelement zu einer freitragenden, eigenständig handhabbaren Baugruppe vormontierbar ist. Das Verbindungselement gewährleistet eine ausreichende statische und dynamische Stabilität des erfindungsgemäßen Flugzeugkomponentenmontagesystems und besteht vorzugsweise ebenfalls aus einem leichten und steifen Material, wie z.B. Aluminium, einer Aluminiumlegierung, GFK, CFK oder einem sonstigen Kohlefasermaterial. Vorzugsweise ist das Verbindungselement in Form eines durchgängigen Unterbodens ausgebildet, der bogenförmig von dem Rahmenelement überspannt wird. Im in einem Flugzeug montierten Zustand des erfindungsgemäßen Flugzeugkomponentenmontagesystems wird das Verbindungselement vorzugsweise von Querträgern der Flugzeugstruktur abgestützt und bildet oder trägt einen Boden der Flugzeugkabine. Durch eine derartige Konstruktion des erfindungsgemäßen Flugzeugkomponentenmontagesystems kann ggf. die Anzahl der Querträger in der Flugzeugstruktur verringert werden, da lediglich zwei Querträger erforderlich sind, um für eine ausreichende Abstützung des Verbindungselements und damit des gesamten Flugzeugkomponentenmontagesystems zu sorgen.

Das erfindungsgemäße Flugzeugkomponentenmontagesystem umfasst ferner eine Befestigungsvorrichtung zur Befestigung der Interieurkomponente, der Rohrleitung und/oder der elektrischen Leitung an dem Rahmenelement und/oder dem Verbindungselement. Als Befestigungsvorrichtung zur Befestigung der Interieurkomponente, der Rohrleitung und/oder der elektrischen Leitung an dem Rahmenelement und/oder dem Verbindungselement kann eine Schraubvorrichtung, eine Klemme, eine Schiene, oder eine Rastvorrichtung dienen. Die Befestigungsvorrichtung kann an dem Rahmenelement und/oder dem Verbindungselement angebracht, aber auch integriert mit dem Rahmenelement und/oder dem Verbindungselement ausgebildet sein.

Mit Hilfe der Befestigungsvorrichtung kann ein Dadopaneel, ein Seitenverkleidungspaneel, ein Deckenverkleidungspaneel, ein Lichtband, ein Gepäckfach, ein Sitz oder ein sonstiges Interieurbauteil an dem Rahmenelement und/oder dem Verbindungselement befestigt werden. Eine mit Hilfe der Befestigungsvorrichtung an dem Rahmenelement und/oder dem Verbindungselement befestigbare Rohrleitung kann z.B. eine luftführende Leitung einer Flugzeugklimaanlage oder eine Wasserleitung sein. Die Befestigungsvorrichtung kann die Rohrleitung an dem Rahmenelement und/oder dem Verbindungselement befestigen. Alternativ dazu kann die Befestigungsvorrichtung jedoch auch eine Integration der Rohrleitung in das Rahmenelement und/oder das Verbindungselement ermöglichen. Wenn die Befestigungsvorrichtung dazu dienen soll, eine elektrische Leitung an dem Rahmenelement und/oder dem Verbindungselement des erfindungsgemäßen Flugzeugkomponentenmontagesystems zu befestigen, kann die Befestigungsvorrichtung, je nach Bedarf, so gestaltet sein, dass sie eine einzige elektrische Leitung, aber auch ein Bündel elektrischer Leitungen an dem Rahmenelement und/oder dem Verbindungselement des Flugzeugkomponentenmontagesystems befestigen kann.

Die Befestigungsvorrichtung kann so konstruiert sein, dass mit ihrer Hilfe lediglich ein einziges Bauteil an dem Rahmenelement und/oder dem Verbindungselement des Flugzeugkomponentenmontagesystems befestigt werden kann. Alternativ dazu kann die Befestigungsvorrichtung jedoch auch so gestaltet sein, dass mehrere Interieurkomponenten, Rohrleitungen und/oder elektrische Leitungen mit Hilfe einer einzigen Befestigungsvorrichtung an dem Rahmenelement und/oder dem Verbindungselement des erfindungsgemäßen Flugzeugkomponentenmontagesystems befestigbar sind. Darüber hinaus kann das erfindungsgemäße Flugzeugkomponentenmontagesystem auch eine Mehrzahl von Befestigungsvorrichtungen zur Befestigung von Interieurkomponenten, Rohrleitungen und/oder elektrischen Leitungen an dem Rahmenelement und/oder dem Verbindungselement umfassen.

An dem Rahmenelement und/oder dem Verbindungselement des erfindungsgemäßen Flugzeugkomponentenmontagesystems ist eine erste Führungseinrichtung vorgesehen, die dazu eingerichtet ist, derart mit einer an einer Flugzeugstruktur vorgesehenen und zu der ersten Führungseinrichtung komplementären zweiten Führungseinrichtung zusammenzuwirken, dass das Flugzeugkomponentenmontagesystem relativ zur Flugzeugstruktur verschiebbar mit der Flugzeugstruktur verbindbar ist. Mit Hilfe der ersten und der zweiten Führungseinrichtung kann das erfindungsgemäße Flugzeugkomponentenmontagesystem gegebenenfalls mit bereits daran befestigten Interieurkomponenten, Rohrleitungen und/oder elektrischen Leitungen in eine gewünschte Position relativ zur Flugzeugstruktur geschoben werden. Das erfindungsgemäße Flugzeugkomponentenmontagesystem ist somit besonders einfach und komfortabel an der Flugzeugstruktur montierbar.

Ein besonderer Vorteil des erfindungsgemäßen Flugzeugkomponentenmontagesystems besteht darin, dass es als Trägerelement für verschiedene Interieurkomponenten, d.h. Interieurkomponenten verschiedener Form und Größe, Rohrleitungen und/oder elektrische Leitungen dienen kann. Dadurch müssen die Anzahl sowie die Anordnung der an der Flugzeugstruktur vorgesehenen Befestigungspunkte für diese Bauteile nicht länger an die einzelnen Bauteile, sondern lediglich an das die Bauteile tragende Flugzeugkomponentenmontagesystem angepasst werden. Das erfindunggemäße Flugzeugkomponentenmontagesystem ermöglicht somit eine Entkopplung der an den Interieurbauteilen, Rohrleitungen und/oder elektrischen Leitungen vorgesehenen Befestigungspunkten von den an der Flugzeugstruktur vorgesehenen Befestigungspunkten. Infolgedessen kann die Anzahl der an der Flugzeugstruktur vorgesehenen Befestigungspunkte für die Interieurkomponenten, Rohrleitungen und/oder elektrischen Leitungen durch den Einsatz des erfindungsgemäßen Flugzeugkomponentenmontagesystems beträchtlich verringert werden. Ferner wird eine Normierung der Anordnung der Befestigungspunkte für die Interieurkomponenten, Rohrleitungen und/oder elektrischen Leitungen an der Flugzeugstruktur möglich.

Da durch den Einsatz des erfindungsgemäßen Flugzeugkomponentenmontagesystems auf eine Abstimmung der interieurbauteilseitigen und der flugzeugstrukturseitigen Befestigungspunkte verzichtet werden kann, wird eine erhöhte Flexibilität bei der Konstruktion sowohl der Interieurkomponenten, der Rohrleitungen und/oder der elektrischen Leitungen als auch der Flugzeugstruktur erreicht. Diese erhöhte Flexibilität kann für eine Gewichtsoptimierung der Interieurkomponenten, Rohrleitungen und/oder elektrischen Leitungen sowie der Flugzeugstruktur genutzt werden.

Ein weiterer Vorteil, der durch die Entkopplung der Interieurbauteile, Rohrleitungen und/oder elektrischen Leitungen von der Flugzeugstruktur erzielt wird, besteht darin, dass während des Flugs auftretende Verformungen der Flugzeugstruktur nicht mehr unmittelbar auf die Interieurkomponenten, Rohrleitungen und/oder elektrischen Leitungen übertragen werden. Infolgedessen können Relativbewegungen zwischen den Interieurkomponenten, den Rohrleitungen und/oder den elektrischen Leitungen minimiert werden. Aufwändig abzudichtende Toleranzspalte zwischen den einzelnen Bauteilen sind daher nur noch in reduziertem Umfang erforderlich.

Schließlich vereinfacht das erfindungsgemäße Flugzeugkomponentenmontagesystem die Endkontrolle der Interieurkomponenten, Rohrleitungen und/oder elektrischen Leitungen, da diese Bauteile nach ihrer Befestigung an dem erfindungsgemäßen Flugzeugkomponentenmontagesystem bereits außerhalb des Flugzeugs geprüft werden können. Dadurch wird eine schnellere und komfortablere Fehleranalyse und Fehlerbehebung möglich.

Vorzugsweise umfasst das erfindungsgemäße Flugzeugkomponentenmontagesystem eine Fixierungseinrichtung, die dazu eingerichtet ist, das Flugzeugkomponentenmontagesystem in einer gewünschten Position an der Flugzeugstruktur zu fixieren. Das Flugzeugkomponentenmontagesystem kann dann durch das Zusammenwirken der an dem Rahmenelement und/oder dem Verbindungselement vorgesehenen ersten Führungseinrichtung mit der an der Flugzeugstruktur vorgesehenen und zu der ersten Führungseinrichtung komplementären zweiten Führungseinrichtung in die gewünschte Position relativ zur Flugzeugstruktur geschoben und dort fixiert werden. Die Fixierungseinrichtung kann beispielsweise eine Schraubvorrichtung sein, die es ermöglicht, das Flugzeugkomponentenmontagesystem in der gewünschten Position mit der Flugzeugstruktur zu verschrauben.

Vorzugsweise ist die Fixierungseinrichtung jedoch in Form eines Rastmechanismus ausgebildet, der dazu eingerichtet ist, das Flugzeugkomponentenmontagesystem mit der Flugzeugstruktur zu verriegeln, wenn sich das Flugzeugkomponentenmontagesystem in der gewünschten Position relativ zur Flugzeugstruktur befindet. Eine in Form eines Rastmechanismus ausgebildete Fixierungseinrichtung ermöglicht eine besonders komfortable Befestigung des erfindungsgemäßen Flugzeugkomponentenmontagesystems an der Flugzeugstruktur. Die Fixierungseinrichtung kann dazu vorgesehen sein, das Verbindungselement an Querträgern der Flugzeugstruktur zu fixieren.

Alternativ oder zusätzlich dazu kann jedoch auch an dem Rahmenelement mindestens eine Krafteinleitungsvorrichtung zum Anbringen des Rahmenelements an einem Spant der Flugzeugstruktur ausgebildet sein. Die Krafteinleitungsvorrichtung kann z.B. laschenförmig ausgebildet sein. Beispielsweise kann an jeder Längsstrebe des Rahmenelements mindestens eine Krafteinleitungsvorrichtung vorgesehen sein, durch die eine Schraube oder ein Bolzen hindurchgeführt werden kann, um das Rahmenelement einfach und sicher mit einem Spant der Flugzeugstruktur zu verbinden. Je nach Bedarf können jedoch auch mehrere Krafteinleitungsvorrichtungen entlang der Länge der Längsstreben des Rahmenelements verteilt angeordnet sein, um eine sichere Befestigung des Rahmenelements an der Flugzeugstruktur zu gewährleisten.

Bei einer bevorzugten Ausführungsform des erfindungsgemäßen Flugzeugkomponentenmontagesystems umfasst die erste Führungseinrichtung eine sich von dem Verbindungselement erstreckende Führungsschiene. Diese Führungsschiene ist vorzugsweise dazu eingerichtet, mit einer in Querträgern der Flugzeugstruktur vorgesehenen Aufnahme der zweiten Führungseinrichtung zusammenzuwirken. Alternativ dazu kann die erste Führungseinrichtung auch eine in dem Verbindungselement ausgebildete Aufnahme umfassen, die dazu eingerichtet ist, mit einer Führungsschiene zusammenzuwirken, die sich von Querträgern der Flugzeugstruktur erstreckt. Das erfindungsgemäße Flugzeugkomponentenmontagesystem kann dann von den Querträgern der Flugzeugstruktur abgestützt in die gewünschte Position relativ zur Flugzeugstruktur geschoben und dort mit Hilfe der Fixierungseinrichtung an der Flugzeugstruktur befestigt werden. Dies ermöglicht eine besonders komfortable Montage des erfindungsgemäßen Flugzeugkomponentenmontagesystems in einem Flugzeug.

Vorzugsweise umfasst/umfassen die erste und/oder die zweite Führungseinrichtung eine Einrichtung zur akustischen Entkopplung des Flugzeugkomponentenmontagesystems von der Flugzeugstruktur. Alternativ oder zusätzlich dazu kann jede Lagerungsvorrichtung, über die das Flugzeugkomponentenmontagesystem an der Flugzeugstruktur anliegt und/oder jede Fixierungseinrichtung und/oder Krafteinleitungsvorrichtung, über die das Flugzeugkomponentenmontagesystem an der Flugzeugstruktur befestigt werden kann, mit einer Einrichtung zur akustischen Entkopplung des Flugzeugkomponentenmontagesystems von der Flugzeugstruktur ausgestattet sein.

Als Einrichtungen zur akustischen Entkopplung des Flugzeugkomponentenmontagesystems von der Flugzeugstruktur können Shock Mounts eingesetzt werden. Unter Shock Mounts werden hier Lagerungen verstanden, die aus einem schwingungsdämpfenden, beispielsweise einem gummielastischen Material bestehen und für eine erschütterungsfreie Befestigung des Flugzeugkomponentenmontagesystems und somit der an dem Flugzeugkomponentenmontagesystems angebrachten Interieurkomponenten, Rohrleitungen und/oder elektrischen Leitungen an der Flugzeugstruktur sorgen. Bei Bedarf können in den Shock Mounts geeignete Durchgangsöffnungen vorgesehen sein, die es ermöglichen, eine Schraube oder einen Bolzen zur Befestigung des Flugzeugkomponentenmontagesystems an der Flugzeugstruktur durch die Shock Mounts hindurchzuführen. Alternativ dazu können in den Shock Mounts auch elastische Buchsen vorgesehen sein.

Vorzugsweise ist an dem erfindungsgemäßen Flugzeugkomponentenmontagesystem mindestens eine erste Schnittstelle vorgesehen, die an mindestens eine an dem Flugzeugkomponentenmontagesystem befestigte elektrische Leitung angeschlossen ist. Die erste Schnittstelle ist vorzugsweise elektrisch mit einer zu der ersten Schnittstelle komplementären, aber nicht an dem Flugzeugkomponentenmontagesystem angebrachten zweiten Schnittstelle verbindbar, wenn sich das Flugzeugkomponentenmontagesystem in der gewünschten Position relativ zur Flugzeugstruktur befindet. Die zweite Schnittstelle kann beispielsweise an der Flugzeugstruktur befestigt oder in die Flugzeugstruktur integriert sein. Alternativ dazu kann die zweite Schnittstelle jedoch auch an einem separaten Bauteil ausgebildet sein. Durch eine Verbindung der ersten mit der zweiten Schnittstelle wird auf rasche und komfortable Art und Weise eine elektrische Verbindung zwischen einer an dem Flugzeugkomponentenmontagesystem befestigten elektrischen Leitung und einer entsprechenden elektrischen Anschlussleitung hergestellt.

Vorzugsweise sind mehrere an dem Flugzeugkomponentenmontagesystem befestigte elektrische Leitungen an die erste Schnittstelle angeschlossen und können durch eine Verbindung der ersten mit der zweiten Schnittstelle elektrisch mit entsprechenden Anschlussleitungen verbunden werden. Bei Bedarf können an dem erfindungsgemäßen Flugzeugkomponentenmontagesystem auch mehrere erste Schnittstellen vorgesehen sein, die jeweils mit entsprechenden komplementären zweiten Schnittstellen verbindbar sind, wenn sich das Flugzeugkomponentenmontagesystem in der gewünschten Position relativ zur Flugzeugstruktur befindet.

Vorzugsweise wird die elektrische Verbindung zwischen der ersten und der zweiten Schnittstelle hergestellt, wenn das Flugzeugkomponentenmontagesystem mit Hilfe der Fixierungseinrichtung in der gewünschten Position an der Flugzeugstruktur fixiert wird. Beispielsweise kann die Fixierungseinrichtung einen Hebel umfassen, der über ein Drehgelenk mit einem Querträger der Flugzeugstruktur verbindbar ist. An einem Ende des Hebels kann sich eine Rastvorrichtung befinden, die dazu eingerichtet ist, mit einer komplementären Rastvorrichtung zusammenzuwirken, die beispielsweise an dem Verbindungselement des Flugzeugkomponentenmontagesystems vorgesehen ist. Die erste Schnittstelle kann in die an dem Flugzeugkomponentenmontagesystem vorgesehene Rastvorrichtung integriert sein, während die zweite Schnittstelle in die an dem Hebel vorgesehene Rastvorrichtung integriert sein kann.

Der Hebel kann beispielsweise mittels einer Feder in seine Entriegelungsstellung vorgespannt sein. Wenn das erfindungsgemäße Flugzeugkomponentenmontagesystem in die gewünschte Position relativ zur Flugzeugstruktur geschoben wird, wirkt vorzugsweise ein mit einer Gleitfläche versehenes freies Ende des Hebels derart mit dem Flugzeugkomponentenmontagesystem zusammen, dass der Hebel in seine Verriegelungsstellung gedreht wird, in der die an dem Hebel vorgesehene Rastvorrichtung mit der z.B. an dem Verbindungselement des Flugzeugkomponentenmontagesystems vorgesehenen komplementären Rastvorrichtung verrastet. Dadurch wird das Flugzeugkomponentenmontagesystem in der gewünschten Position an der Flugzeugstruktur fixiert. Gleichzeitig wird eine elektrische Verbindung zwischen der ersten und der zweiten Schnittstelle hergestellt. Eine derartige Konstruktion des erfindungsgemäßen Flugzeugkomponentenmontagesystems ermöglicht nicht nur eine rasche Fixierung des Flugzeugkomponentenmontagesystems an der Flugzeugstruktur, sondern auch eine rasche und einfache Herstellung einer elektrischen Verbindung zwischen den an dem Flugzeugkomponentenmontagesystem befestigten elektrischen Leitungen und entsprechenden flugzeugstrukturseitigen Anschlussleitungen. Darüber hinaus können die an dem Flugzeugkomponentenmontagesystem befestigten elektrischen Leitungen bis zur ersten Schnittstelle bereits außerhalb des Flugzeugs auf ihre ordnungsgemäße Funktion überprüft werden.

Vorzugsweise ist ein erster Anschluss einer an dem Flugzeugkomponentenmontagesystem befestigten und/oder in das Flugzeugkomponentenmontagesystem integrierten Rohrleitung mit einem zu dem ersten Anschluss komplementären zweiten Anschluss verbindbar, wenn sich das Flugzeugkomponentenmontagesystem in der gewünschten Position relativ zur Flugzeugstruktur befindet. Der zweite Anschluss kann beispielsweise an der Flugzeugstruktur befestigt oder in die Flugzeugstruktur integriert sein. Alternativ dazu kann der zweite Anschluss jedoch auch an einem separaten Bauteil ausgebildet sein.

Vorzugsweise wird die Verbindung zwischen dem ersten und dem zweiten Anschluss, ähnlich wie die Verbindung zwischen der ersten und der zweiten Schnittstelle, hergestellt, wenn das erfindungsgemäße Flugzeugkomponentenmontagesystem mit Hilfe der Fixierungseinrichtung in der gewünschten Position an der Flugzeugstruktur fixiert wird. Beispielsweise kann der zweite Anschluss, ebenso wie die zweite Schnittstelle, in einen Hebel integriert sein, der auch eine Rastvorrichtung der Fixierungseinrichtung zur Fixierung des Flugzeugkomponentenmontagesystems an der Flugzeugstruktur trägt. Alternativ dazu ist es jedoch auch denkbar, den zweiten Anschluss an einem separaten Hebel auszubilden, der automatisch eine Verbindung zwischen dem ersten und dem zweiten Anschluss herstellt, wenn sich das erfindungsgemäße Flugzeugkomponentenmontagesystem in der gewünschten Position relativ zur Flugzeugstruktur befindet. Dies ist insbesondere dann sinnvoll, wenn das Flugzeugkomponentenmontagesystem mehrere Rohrleitungen mit ersten Anschlüssen trägt, die jeweils mit entsprechenden zweiten Anschlüssen zu verbinden sind, wenn sich das Flugzeugkomponentenmontagesystem in der gewünschten Position relativ zur Flugzeugstruktur befindet.

Wenn alle an dem erfindungsgemäßen Flugzeugkomponentenmontagesystem befestigten elektrischen Leitungen sowie alle an dem erfindungsgemäßen Flugzeugkomponentenmontagesystem befestigten bzw. in das Flugzeugkomponentenmontagesystem integrierten Rohrleitungen direkt an entsprechende Anschlussleitungen anschließbar sind, wenn sich das Flugzeugkomponentenmontagesystem in der gewünschten Position relativ zur Flugzeugstruktur befindet, ist die Montage des Flugzeugkomponentenmontagesystems sowie die Inbetriebnahme der daran befestigten Komponenten besonders einfach und komfortabel (plug and play). Darüber hinaus können die Rohrleitungen, ebenso wie die elektrischen Leitungen, bis zu den jeweiligen ersten Schnittstellen bzw. ersten Anschlüssen bereits außerhalb des Flugzeugs geprüft werden. Dadurch wird die Funktionsprüfung dieser Leitungen sowie das Auffinden sowie die Behebung etwaiger Fehler beträchtlich vereinfacht.

Vorzugsweise ist mindestens eine Strebe, beispielsweise eine Längsstrebe des Rahmenelements des erfindungsgemäßen Flugzeugkomponentenmontagesystems hohlzylindrisch ausgebildet. Eine hohlzylindrisch ausgebildete Strebe des Rahmenelements kann als luft- oder wasserführende, in das Rahmenelement und damit das erfindungsgemäße Flugzeugkomponentenmontagesystem integrierte Rohrleitung dienen. Darüber hinaus kann eine hohlzylindrisch ausgebildete Strebe des Rahmenelements auch als Führungsrohr für an dem Rahmenelement und damit dem Flugzeugkomponentenmontagesystem zu befestigende elektrische Leitungen dienen.

Gegenwärtig werden die Sekundärisolation eines Flugzeugs bildende Isolationspakete üblicherweise auf die Interieurkomponenten geklebt, bevor diese an der Flugzeugstruktur befestigt werden. Um die häufig gekrümmt ausgebildete und mit Absätzen und dergleichen versehene Kontur der Interieurkomponenten nachzubilden, sind häufig mehrere verschieden geformte Isolationspakete erforderlich. Die Montage der Sekundärisolation ist daher zeitaufwendig und kostenintensiv.

Gemäß einer bevorzugten Ausführungsform der Erfindung weist das Flugzeugkomponentenmontagesystem daher ferner eine weitere Befestigungseinrichtung zur Befestigung eines Isolationspakets an dem Rahmenelement oder dem Verbindungselement auf. Mit anderen Worten, das Flugzeugkomponentenmontagesystem ist so gestaltet, dass auch mindestens ein beispielsweise einen Teil der Flugzeugsekundärisolation bildendes Isolationspaket an dem Flugzeugkomponentenmontagesystem befestigt werden kann. Beispielsweise kann eine an dem Rahmenelement des Flugzeugkomponentenmontagesystems befestigte Interieurkomponente im montierten Zustand des Flugzeugkomponentenmontagesystems auf einer von der Flugzeugstruktur abgewandten Seite des Rahmenelements angeordnet sein. Das Isolationspaket kann dagegen im montierten Zustand des Flugzeugkomponentenmontagesystems entweder auf einer der Flugzeugstruktur zugewandten Seite des Rahmenelements zwischen dem Rahmenelement und der Flugzeugstruktur angeordnet oder zwischen der Interieurkomponente und dem Rahmenelement auf der von der Flugzeugstruktur abgewandten Seite des Rahmenelements befestigt sein.

Durch den Einsatz des erfindungsgemäßen Flugzeugkomponentenmontagesystems bei der Montage von beispielsweise die Sekundärisolation des Flugzeugs bildenden Isolationspaketen kann auf das aufwendige Aufkleben der Isolationspakete auf die Interieurkomponenten verzichtet werden. Insbesondere weist das Rahmenelement des Flugzeugkomponentenmontagesystems im Vergleich zu den meisten Flugzeuginterieurkomponenten eine deutlich einfacher gestaltete Kontur ohne Absätze und dergleichen auf, so dass weniger separat ausgebildete Isolationspakete eingesetzt werden müssen. Dadurch werden beträchtliche Kosteneinsparungen möglich.

Die weitere Befestigungseinrichtung zur Befestigung eines Isolationspakets an dem Rahmenelement oder dem Verbindungselement des erfindungsgemäßen Flugzeugkomponentenmontagesystems ist vorzugsweise dazu eingerichtet, das Isolationspaket mechanisch lösbar an dem Rahmenelement oder dem Verbindungselement des Flugzeugkomponentenmontagesystems zu befestigen. Beispielsweise kann die weitere Befestigungseinrichtung in Form eines Klettverschlusses, eines Haken- und Flauschbands, eines Pilzkopfbands oder einer Tannenbaumbefestigungseinrichtung ausgebildet sein. Alternativ dazu ist es auch möglich, das Isolationspaket mit Hilfe von Schrauben, Nieten, Clips, Klemmeinrichtungen, Magnethaltern, Druckverschlüssen mit Federn, einer Spreizbefestigungseinrichtung oder einer Kugelbefestigungseinrichtung an dem Rahmenelement zu befestigen. Weiterhin ist es denkbar, das Isolationspaket an Befestigungspunkten einzuhängen, die an dem Rahmenelement oder dem Verbindungselement vorgesehen sind, oder das Isolationspaket etwas größer auszuführen als das Rahmenelement oder das Verbindungselement, um das Rahmenelement oder das Verbindungselement umschlagen und das Isolationspaket mittels eines Gummibands an dem Rahmenelement oder dem Verbindungselement befestigen zu können.

Bei einer bevorzugten Ausführungsform des erfindungsgemäßen Flugzeugkomponentenmontagesystems umfasst das Rahmenelement mindestens einen Verschwenkmechanismus, der ein Verschwenken eines ersten Abschnitts des Rahmenelements relativ zu einem zweiten Abschnitt des Rahmenelements ermöglicht. Der Verschwenkmechanismus kann beispielsweise in Form eines Scharniers ausgebildet sein. Dadurch kann das Rahmenelement besonders platzsparend transportiert werden. Falls gewünscht oder erforderlich kann das Rahmenelement auch eine Mehrzahl von Verschwenkmechanismen umfassen.

Ein erfindungsgemäßes Verfahrens zur Montage einer Interieurkomponente, einer Rohrleitung und/oder einer elektrischen Leitung in einem Flugzeug umfasst die Schritte Bereitstellen eines oben beschriebenen Flugzeugkomponentenmontagesystems, Befestigen der Interieurkomponente, der Rohrleitung und/oder der elektrischen Leitung an dem Flugzeugkomponentenmontagesystem, Verbinden der an dem Rahmenelement und/oder dem Verbindungselement des Flugzeugkomponentenmontagesystems vorgesehenen ersten Führungseinrichtung mit der an der Flugzeugstruktur vorgesehenen und zu der ersten Führungseinrichtung komplementären zweiten Führungseinrichtung und Verschieben des Flugzeugkomponentenmontagesystems relativ zur Flugzeugstruktur, bis sich das Flugzeugkomponentenmontagesystem in einer gewünschten Position relativ zur Flugzeugstruktur befindet. Vorzugsweise wird/werden die Interieurkomponente, die Rohrleitung und/oder die elektrische Leitung an dem Flugzeugkomponentenmontagesystem befestigt, bevor das Flugzeugkomponentenmontagesystem verschiebbar mit der Flugzeugstruktur verbunden wird.

Wenn das Flugzeugkomponentenmontagesystem die gewünschte Position relativ zur Flugzeugstruktur erreicht hat, wird das Flugzeugkomponentenmontagesystem vorzugsweise mittels der z.B. in Form eines Rastmechanismus ausgebildeten Fixierungseinrichtung in der gewünschten Position an der Flugzeugstruktur fixiert.

Wenn sich das Flugzeugkomponentenmontagesystem in der gewünschten Position relativ zur Flugzeugstruktur befindet, wird vorzugsweise die an dem Flugzeugkomponentenmontagesystem vorgesehene erste Schnittstelle elektrisch mit der zu der ersten Schnittstelle komplementären zweiten Schnittstelle verbunden. Wenn an dem Flugzeugkomponentenmontagesystem mehrere erste Schnittstellen vorgesehen sind, werden vorzugsweise alle ersten Schnittstellen elektrisch mit entsprechenden beispielsweise an der Flugzeugstruktur oder einem separaten Bauteil angebrachten oder in die Flugzeugstruktur oder ein separates Bauteil integrierten zweiten Schnittstellen verbunden.

In ähnlicher Weise werden vorzugsweise der erste Anschluss der an dem Flugzeugkomponentenmontagesystem befestigten und/oder in das Flugzeugkomponentenmontagesystem integrierten Rohrleitung mit dem zu dem ersten Anschluss komplementären zweiten Anschluss verbunden, wenn sich das Flugzeugkomponentenmontagesystem in der gewünschten Position relativ zur Flugzeugstruktur befindet. Wenn mehrere Rohrleitungen mit entsprechenden ersten Anschlüssen an dem Flugzeugkomponentenmontagesystem befestigt und/oder in das Flugzeugkomponentenmontagesystem integriert sind, werden alle ersten Anschlüsse mit entsprechenden komplementären zweiten Anschlüssen verbunden, wenn sich das Flugzeugkomponentenmontagesystem in der gewünschten Position relativ zur Flugzeugstruktur befindet.

Gemäß einer bevorzugten Ausführungsform des erfindungsgemäßen Verfahrens zur Montage eines Flugzeugkomponentenmontagesystems in einem Flugzeug wird vor dem Verbinden der an dem Rahmenelement und/oder dem Verbindungselement des Flugzeugkomponentenmontagesystems vorgesehenen ersten Führungseinrichtung mit der an der Flugzeugstruktur vorgesehenen und zu der ersten Führungseinrichtung komplementären zweiten Führungseinrichtung ein Isolationspaket an dem Rahmenelement und/oder dem Verbindungselement des Flugzeugkomponentenmontagesystems befestigt. Bei Bedarf können auch mehrere Isolationspakete an dem Rahmenelement und/oder dem Verbindungselement des Flugzeugkomponentenmontagesystems befestigt werden. Dies ermöglicht eine besonders einfache und komfortable Montage der Sekundärisolation des Flugzeugs.

Ein bevorzugtes Ausführungsbeispiel der Erfindung wird im Folgenden anhand der beigefügten schematischen Zeichnungen näher erläutert, von denen
- Figur 1: eine erste Ausführungsform eines erfindungsgemäßen Flugzeugkomponentenmontagesystems zeigt,
- Figur 2: das Flugzeugkomponentenmontagesystem gemäß Figur 1 mit daran befestigten Interieurkomponenten zeigt,
- Figur 3: das Flugzeugkomponentenmontagesystem gemäß Figur 2 im mit einer Flugzeugstruktur verbundenen Zustand zeigt,
- Figur 4: eine vergrößerte Darstellung einer ersten sowie einer zweiten Führungseinrichtung zur verschiebbaren Verbindung des Flugzeugkomponentenmontagesystems gemäß Figur 3 mit der Flugzeugstruktur zeigt,
- Figur 5: eine zweite Ausführungsform eines erfindungsgemäßen Flugzeugkomponentenmontagesystems mit daran befestigten Interieurkomponenten zeigt,
- Figur 6: einen vergrößerten Ausschnitt des Flugzeugkomponentenmontagesystems gemäß Figur 5 im mit einer Flugzeugstruktur verbundenen Zustand zeigt,
- Figur 7: einen Teil eines Rahmenelements einer dritten Ausführungsform eines erfindungsgemäßen Flugzeugkomponentenmontagesystems mit daran befestigten Interieurkomponenten zeigt und
- Figur 8: die dritte Ausführungsform eines erfindungsgemäßen Flugzeugkomponentenmontagesystems im mit einer Flugzeugstruktur verbundenen Zustand zeigt.

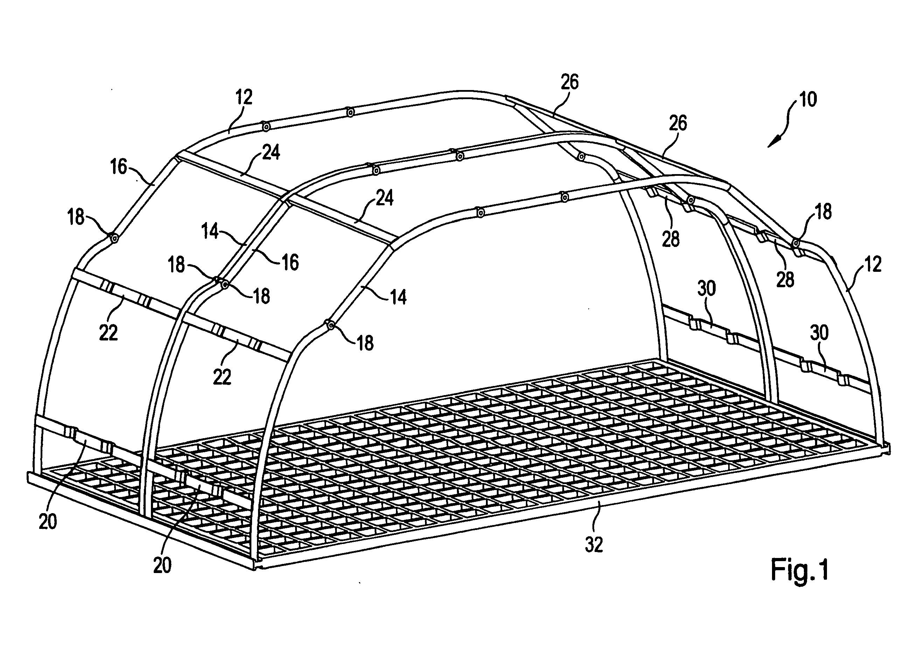

Figur 1 zeigt eine erste Ausführungsform eines Flugzeugkomponentenmontagesystems 10 zur Montage von Interieurkomponenten, Rohrleitungen und elektrischen Leitungen in einem Flugzeug. Das Flugzeugkomponentenmontagesystem 10 umfasst zwei bogenförmig ausgebildete Rahmenelemente 12 aus Aluminium, die jeweils zwei sich parallel zueinander erstreckende Längsstreben 14, 16 umfassen. An den Längsstreben 14, 16 der Rahmenelemente 12 ist eine Mehrzahl von laschenförmigen Krafteinleitungsvorrichtungen 18 ausgebildet. Verbindungsstreben 20, 22, 24, 26, 28, 30 erstrecken sich im Wesentlichen parallel zueinander zwischen den Längsstreben 14, 16 der Rahmenelemente 12, wobei die Verbindungsstreben 20, 22, 28, 30 jeweils mit zwei Ausnehmungen versehen sind.

Ein ebenfalls aus Aluminium bestehendes Verbindungselement 32 erstreckt sich zwischen einem ersten und einem zweiten Ende der Rahmenelemente 12 und bildet eine Art Unterboden, der bogenförmig von den Rahmenelementen 12 überspannt wird. Das Verbindungselement 32 verleiht dem Flugzeugkomponentenmontagesystem 10 eine ausreichende Steifigkeit, so dass das Flugzeugkomponentenmontagesystem 10 eine freitragende, eigenständig handhabbare Baugruppe bildet.

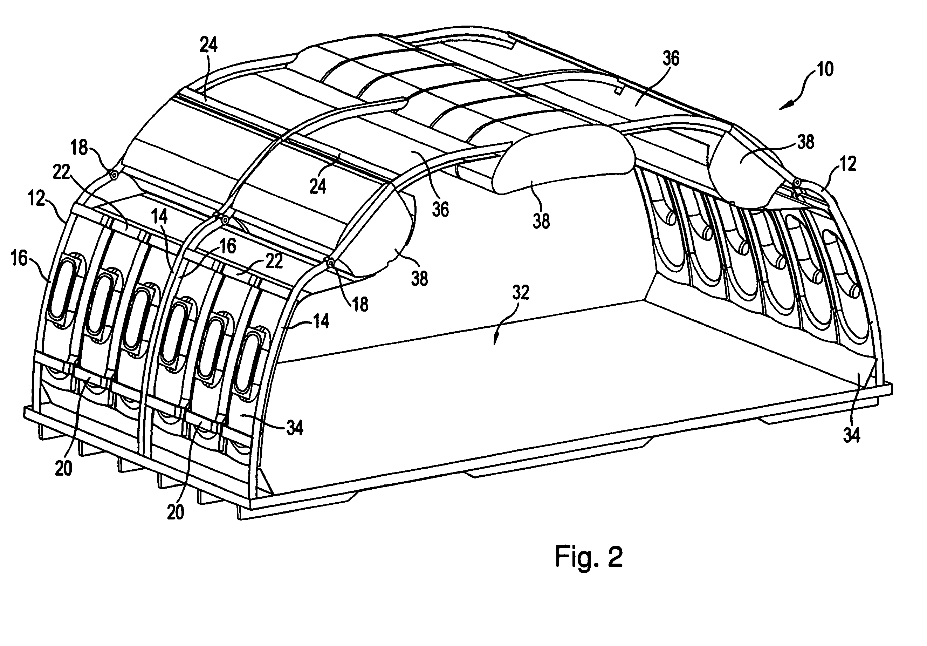

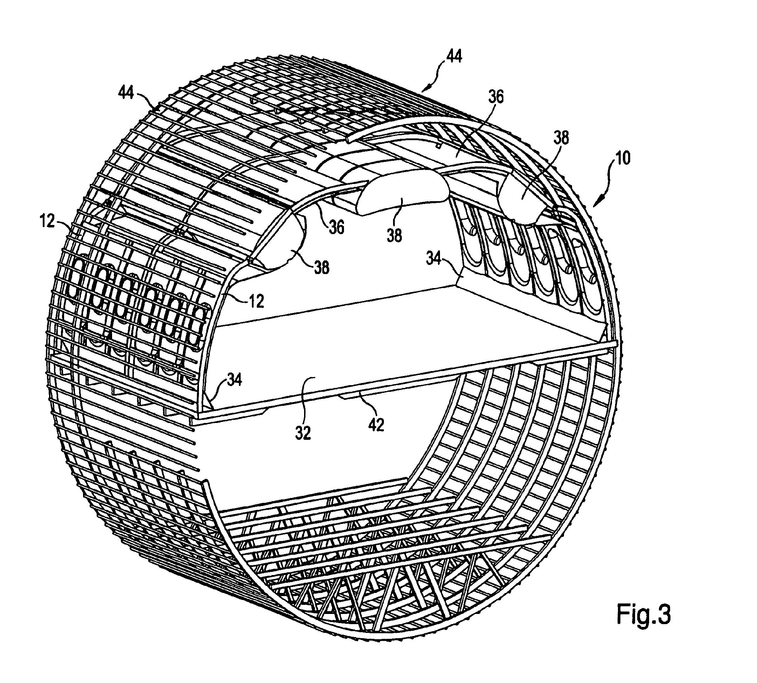

An den Rahmenelementen 12 sind in den Figuren nicht gezeigte Befestigungsvorrichtungen ausgebildet, die dazu dienen, Interieurkomponenten, Rohrleitungen und elektrische Leitungen an den Rahmenelementen 12 zu befestigen. Wie aus den Figuren 2 und 3 ersichtlich wird, können Seitenverkleidungspaneele 34, Deckenverkleidungspaneele 36 und Gepäckfächer 38 an den Rahmenelementen 12 des Flugzeugkomponentenmontagesystems 10 befestigt werden. Als Befestigungsvorrichtungen zur Befestigung dieser Bauteile an den Rahmenelementen 12 des Flugzeugkomponentenmontagesystems 10 können Halterungen, Klemmen oder Rastvorrichtungen dienen. Alternativ dazu ist es jedoch auch möglich, Schraubvorrichtungen vorzusehen.

Neben den gezeigten Bauteilen können selbstverständlich auch andere Interieurkomponenten, wie z.B. Türrahmenbauteile, Lichtbänder etc. an den Rahmenelementen 12 des Flugzeugkomponentenmontagesystems 10 befestigt werden. Rohrleitungen einer Flugzeugklimaanlage oder eines Wasserversorgungssystems sowie elektrische Leitungen können z.B. entlang der Streben 14, 16, 20, 22, 24, 26, 28, 30 an den Rahmenelementen 12 fixiert werden. Alternativ oder zusätzlich dazu können die Längsstreben 14, 16 und/oder die Verbindungsstreben 20, 22, 24, 26, 28, 30 der Rahmenelemente 12 auch hohlzylindrisch ausgebildet sein und somit als in die Rahmenelemente 12 integrierte Rohrleitungen oder als Führungsleitungen für elektrische Leitungen dienen.

Das Verbindungselement 32, das in den Figuren 2 und 3 einen durchgängigen, einen begehbaren Boden bildenden Belag aufweist, ist ebenfalls mit in den Figuren nicht gezeigten Befestigungsvorrichtungen zur Befestigung weiterer in den Figuren ebenfalls nicht gezeigter Interieurkomponenten an dem Verbindungselement 32 versehen. Insbesondere sind in dem Verbindungselement 32 Schienen ausgebildet, die dazu dienen, mehrere Reihen von Sitzen an dem Verbindungselement 32 zu befestigen. Darüber hinaus können jedoch auch Rohrleitungen und elektrische Leitungen an dem Verbindungselement 32 befestigt oder in das Verbindungselement 32 integriert werden.

Darüber hinaus sind an den Rahmenelementen 12 in den Figuren nicht gezeigte weitere Befestigungsvorrichtungen ausgebildet, die dazu dienen, Teile einer Sekundärisolation des Flugzeugs bildende Isolationspakete (in den Figuren ebenfalls nicht gezeigt) an den Rahmenelementen 12 zu befestigen. Die Isolationspakete können zwischen den Interieurkomponenten und den Rahmenelementen 12 an den Rahmenelementen 12 befestigt werden. Alternativ dazu ist es jedoch auch möglich, die Isolationspakete auf einer von den Interieurkomponenten abgewandten Seite der Rahmenelemente 12 an den Rahmenelementen 12 zu befestigen.

Figur 3 zeigt das Flugzeugkomponentenmontagesystem 10 mit den daran befestigen Interieurkomponenten im mit einem Teil einer Flugzeugstruktur 40 verbundenen Zustand. Im mit der Flugzeugstruktur 40 verbundenen Zustand des Flugzeugkomponentenmontagesystems 10 stützt sich das Verbindungselement 32 auf parallel zueinander angeordneten Querträgern 42 der Flugzeugstruktur 40 ab. Die Längsstreben 14, 16 erstrecken sich zumindest abschnittsweise im Wesentlichen parallel zu Spanten 44 der Flugzeugstruktur 40. Über die an den Längsstreben 14, 16 der Rahmenelemente 12 ausgebildeten Krafteinleitungsvorrichtungen 18 können die Rahmenelemente 12 mit Hilfe durch die Krafteinleitungsvorrichtungen 18 hindurchgeführter Bolzen mit den Spanten 44 der Flugzeugstruktur 40 verschraubt werden.

Die Spanten 44 sind im mit der Flugzeugstruktur 40 verbundenen Zustand des Flugzeugkomponentenmontagesystems 10 in den an den Verbindungsstreben 20, 22, 28, 30 der Rahmenelemente 12 vorgesehenen Ausnehmungen aufgenommen. Dadurch wird gewährleistet, dass die Spanten 44 die Befestigung der Rahmenelemente 12 an der Flugzeugstruktur 40 nicht behindern.

Zur akustischen Entkopplung der Rahmenelemente 12 von der Flugzeugstruktur 40 erfolgt die Befestigung der Rahmenelemente 12 an den Spanten 44 der Flugzeugstruktur 40 über in den Figuren nicht dargestellte Shock Mounts, d.h. Lagerungen aus einem schwingungsdämpfenden Material. Die Shock Mounts sorgen für eine erschütterungsfreie Befestigung der Rahmenelemente 12 an der Flugzeugstruktur 40 und sind jeweils mit einer Durchgangsöffnung versehen, durch die die zur Befestigung der Rahmenelemente 12 an den Spanten 44 der Flugzeugstruktur 40 dienenden Bolzen hindurchgeführt werden können.

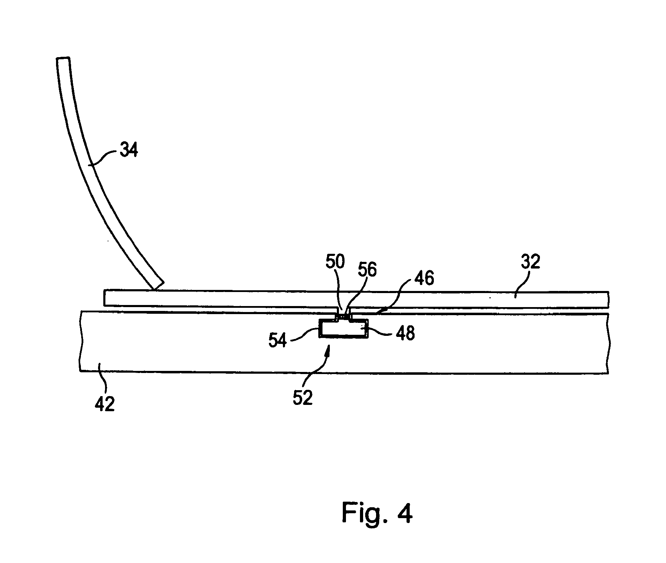

Wie insbesondere aus der Figur 4 ersichtlich wird, erstreckt sich von einer im montierten Zustand des Flugzeugkomponentenmontagesystems 10 den Querträgern 42 der Flugzeugstruktur 40 zugewandten Oberfläche des Verbindungselements 32 eine erste Führungseinrichtung 46. Die erste Führungseinrichtung 46 umfasst eine Führungsschiene 48, die mittels eines Verbindungsstegs 50 an dem Verbindungselement 32 angebracht ist. Die erste Führungseinrichtung 46 ist dazu eingerichtet, mit einer zweiten Führungseinrichtung 52 zusammenzuwirken, die in den Querträgern 42 der Flugzeugstruktur 40 ausgebildet ist. Insbesondere umfasst die zweite Führungseinrichtung 52 eine Aufnahme 54, die dazu dient, die Führungsschiene 48 der ersten Führungseinrichtung 46 verschiebbar aufzunehmen. Durch das Zusammenwirken der ersten Führungseinrichtung 46 mit der zweiten Führungseinrichtung 52 ist das Verbindungselement 32 und somit das gesamte Flugzeugkomponentenmontagesystem 10 relativ zu der Flugzeugstruktur 40 verschiebbar mit der Flugzeugstruktur 40 verbindbar.

Im Bereich des Verbindungsstegs 50 der ersten Führungseinrichtung 46 ist ein Shock Mount 56 aus einem schwingungsdämpfenden Material, wie z.B. einem gummielastischen Material angeordnet. Der Shock Mount 56 sorgt für eine erschütterungsfreie Lagerung des Verbindungselements 32 und somit des gesamten Flugzeugkomponentenmontagesystems 10 auf den Querträgern 42 der Flugzeugstruktur 40. Dadurch wird eine akustische Entkopplung des Flugzeugkomponentenmontagesystems 10 sowie der daran befestigten Bauteile von der Flugzeugstruktur 40 ermöglicht.

Eine in den Figuren nicht gezeigte Fixierungseinrichtung, die beispielsweise in Form eines Rastmechanismus ausgebildet sein kann, sorgt dafür, das Flugzeugkomponentenmontagesystem in einer gewünschten Position mit der Flugzeugstruktur 40 zu verriegeln, wenn sich das Flugzeugkomponentenmontagesystem 10 in der gewünschten Position relativ zur Flugzeugstruktur befindet.

Darüber hinaus ist an dem Flugzeugkomponentenmontagesystem 10 eine in den Figuren ebenfalls nicht gezeigte erste Schnittstelle vorgesehen, die an an dem Flugzeugkomponentenmontagesystem 10 befestigte elektrische Leitungen angeschlossen werden kann. Die erste Schnittstelle ist dazu vorgesehen, elektrisch mit einer zu der ersten Schnittstelle komplementären, an der Flugzeugstruktur 40 befestigten zweiten Schnittstelle verbunden zu werden, wenn das Flugzeugkomponentenmontagesystem 10 die gewünschte Position relativ zur Flugzeugstruktur 40 erreicht hat.

In ähnlicher Weise sind erste Anschlüsse von an dem Flugzeugkomponentenmontagesystem 10 befestigten und/oder in das Flugzeugkomponentenmontagesystem 10 integrierten Rohrleitungen mit zu den ersten Anschlüssen komplementären, an der Flugzeugstruktur 40 befestigten zweiten Anschlüssen verbindbar, wenn sich das Flugzeugkomponentenmontagesystem 10 in der gewünschten Position relativ zur Flugzeugstruktur 40 befindet.

Bei der Montage des Flugzeugkomponentenmontagesystems 10 in einem Flugzeug werden zunächst die gewünschten Interieurkomponenten, Rohrleitungen und elektrischen Leitungen an den Rahmenelementen 12 und dem Verbindungselement 32 des Flugzeugkomponentenmontagesystems 10 befestigt. Falls gewünscht, können darüber hinaus auch einen Teil der Sekundärisolation des Flugzeugs bildend Isolationspakete an den Rahmenelementen 12 des Flugzeugkomponentenmontagesystems 10 befestigt werden. Die an dem Flugzeugkomponentenmontagesystem 10 befestigten Bauteile können noch außerhalb des Flugzeugs einer Funktionsprüfung unterzogen werden.

Anschließend wird die an dem Verbindungselement 32 des Flugzeugkomponentenmontagesystems 10 ausgebildete erste Führungseinrichtung 46 in Eingriff mit der an den Querträgern 42 der Flugzeugstruktur 40 vorgesehenen zweiten Führungseinrichtung 52 gebracht. Das Flugzeugkomponentenmontagesystem 10 mit den daran befestigten Bauteilen kann dann durch das Zusammenwirken der ersten Führungseinrichtung 46 mit der zweiten Führungseinrichtung 52 relativ zur Flugzeugstruktur 40 verschoben werden, bis das Flugzeugkomponentenmontagesystem 10 mit den daran befestigten Komponenten eine gewünschte Position relativ zur Flugzeugstruktur 40 erreicht hat.

Wenn sich das Flugzeugkomponentenmontagesystem 10 mit den daran befestigten Komponenten in der gewünschten Position relativ zur Flugzeugstruktur 40 befindet, wird das Flugzeugkomponentenmontagesystem 10 mit Hilfe der z.B. in Form eines Rastmechanismus ausgebildeten Fixierungseinrichtung an der Flugzeugstruktur 40 fixiert. Gleichzeitig wird die an dem Flugzeugkomponentenmontagesystem 10 vorgesehene erste Schnittstelle elektrisch mit der zu der ersten Schnittstelle komplementären, an der Flugzeugstruktur 40 angebrachten zweiten Schnittstelle verbunden. Dadurch wird eine elektrische Verbindung zwischen den an dem Flugzeugkomponentenmontagesystem 10 befestigten elektrischen Leitungen mit entsprechenden flugzeugstrukturseitigen Anschlussleitungen hergestellt. In ähnlicher Weise werden die ersten Anschlüsse der an dem Flugzeugkomponentenmontagesystem 10 befestigten und/oder in das Flugzeugkomponentenmontagesystem 10 integrierten Rohrleitungen mit komplementären flugzeugstrukturseitigen zweiten Anschlüssen verbunden.

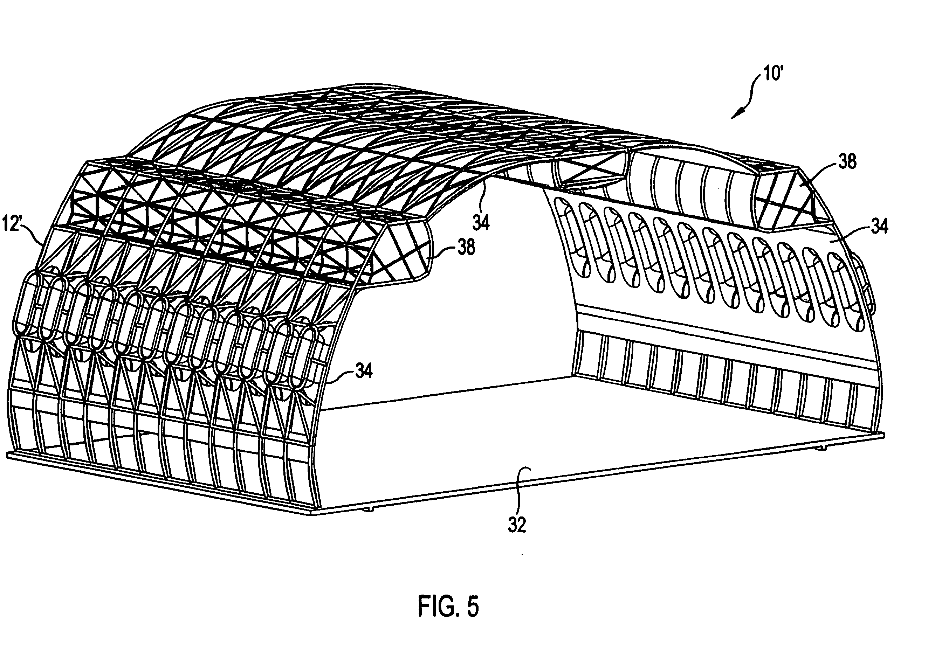

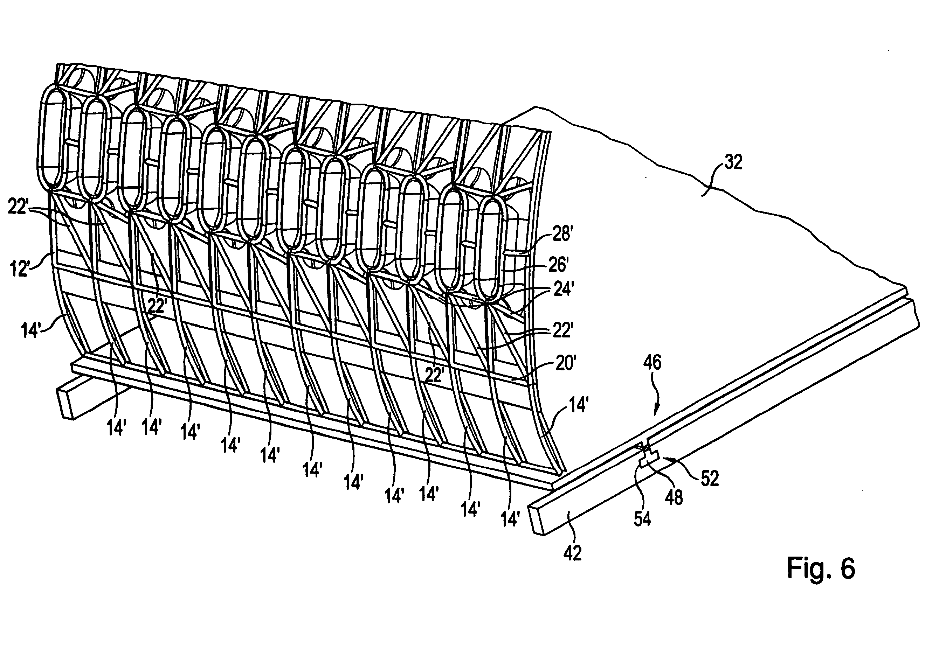

In den Figuren 5 und 6 ist eine zweite Ausführungsform eines Flugzeugkomponentenmontagesystems 10' gezeigt. Anders als das in den Figuren 1 bis 4 veranschaulichte Flugzeugkomponentenmontagesystem 10 umfasst das Flugzeugkomponentenmontagesystem 10' gemäß der Figuren 5 und 6 lediglich ein einziges Rahmenelement 12', das eine Mehrzahl von sich im Wesentlichen parallel zueinander erstreckenden Längsstreben 14' aufweist. Verbindungsstreben 20', 22', 24', 26' und 28' erstrecken sich nicht länger lediglich senkrecht zur den Längsstreben 14', sondern sind in einem Winkel zu den Längsstreben 14' angeordnet. Im Übrigen entspricht der Aufbau des Flugzeugkomponentenmontagesystems 10' gemäß der Figuren 5 und 6 dem Aufbau des in den Figuren 1 bis 4 veranschaulichten Flugzeugkomponentenmontagesystems 10.

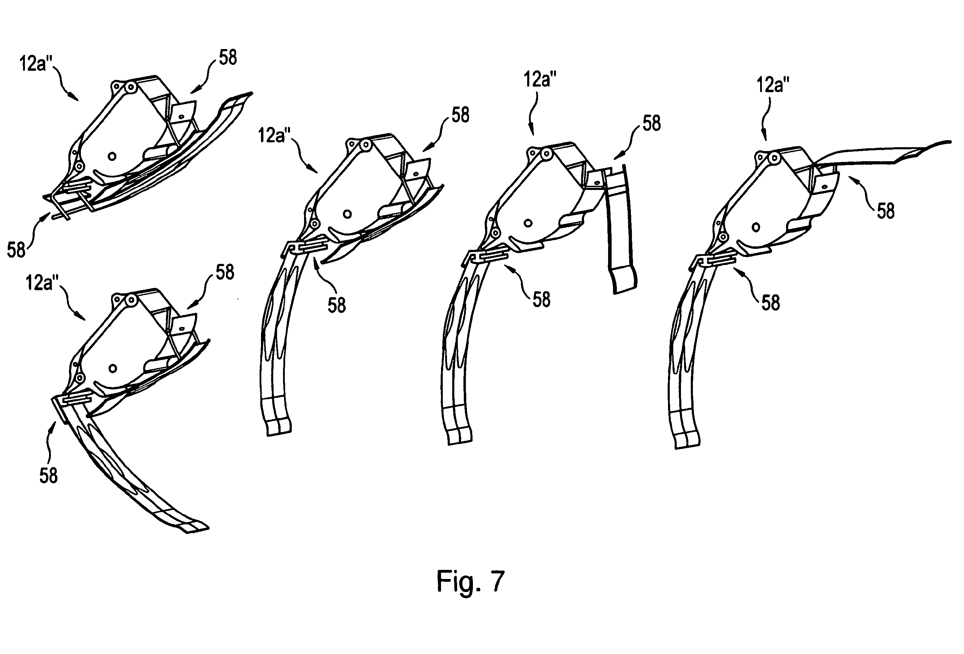

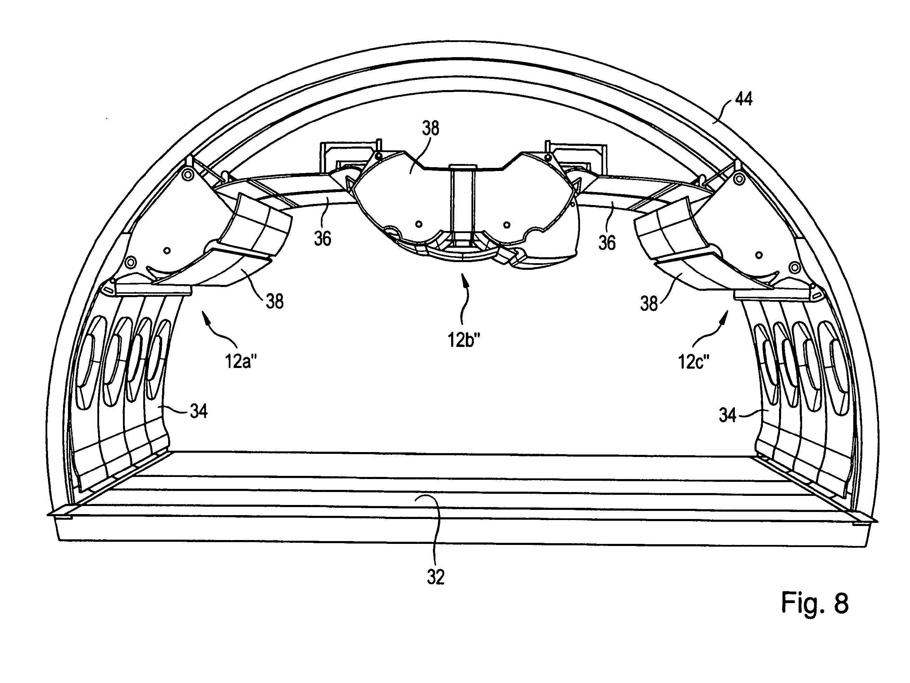

Figur 7 zeigt einen Teil 12a" eines Rahmenelements 12" einer dritten Ausführungsform eines Flugzeugkomponentenmontagesystems 10", das in Figur 8 im mit einer Flugzeugstruktur verbundenen Zustand dargestellt ist. Der in Figur 7 veranschaulichte Teil 12a" des Rahmenelement 12" ist mit in Form von Scharnieren ausgebildeten Verschwenkmechanismen 58 ausgestattet. Mittels der Verschwenkmechanismen 58 können Abschnitte des Rahmenelementteils 12a" relativ zueinander verschwenkt werden. Dadurch wird ein platzsparender Transport des Rahmenelementteils ermöglicht.

Wie aus Figur 8 ersichtlich wird, umfasst das Rahmenelement 12" drei Teile 12a", 12b", 12c", die im miteinander verbundenen Zustand das Rahmenelement 12" bilden. Jedes Teil 12a", 12b", 12c" ist jeweils mit entsprechenden Verschwenkmechanismen 58 ausgestattet, die es ermöglichen einzelne Abschnitte der Rahmenelementteile 12a", 12b", 12c" relativ zueinander zu verschwenken.

## Patentansprüche

1. Flugzeugkomponentenmontagesystem (10; 10'; 10") zur Verwendung bei der Montage einer Interieurkomponente, einer Rohrleitung und/oder einer elektrischen Leitung in einem Flugzeug mit:
- mindestens einem bogenförmig ausgebildeten Rahmenelement (12; 12'; 12"), das eine Mehrzahl von zumindest abschnittsweise im Wesentlichen parallel zueinander angeordneten Längsstreben (14, 16) umfasst,
- einem Verbindungselement (32), das sich zwischen einem ersten und einem zweiten Ende des Rahmenelements (12; 12'; 12") erstreckt und dazu eingerichtet ist, im in einem Flugzeug montierten Zustand des Flugzeugkomponentenmontagesystems (10; 10'; 10'') ein Element eines Bodens einer Kabine des Flugzeugs zu bilden,
- einer Befestigungsvorrichtung zur Befestigung der Interieurkomponente, der Rohrleitung und/oder der elektrischen Leitung an dem Rahmenelement (12; 12'; 12") und/oder dem Verbindungselement (32), und
- einer an dem Rahmenelement (12; 12'; 12") und/oder dem Verbindungselement (32) vorgesehenen ersten Führungseinrichtung (46), die dazu eingerichtet ist, derart mit einer an einer Flugzeugstruktur (40) vorgesehenen und zu der ersten Führungseinrichtung (46) komplementären zweiten Führungseinrichtung (52) zusammenzuwirken, dass das Flugzeugkomponentenmontagesystem (10; 10'; 10") relativ zur Flugzeugstruktur (40) verschiebbar mit der Flugzeugstruktur (40) verbindbar ist.

2. Flugzeugkomponentenmontagesystem nach Anspruch 1,
**gekennzeichnet durch** eine Fixierungseinrichtung, die dazu eingerichtet ist, das Flugzeugkomponentenmontagesystem (10; 10'; 10") in einer gewünschten Position an der Flugzeugstruktur (40) zu fixieren.

3. Flugzeugkomponentenmontagesystem nach Anspruch 2,
**dadurch gekennzeichnet, dass** die Fixierungseinrichtung in Form eines Rastmechanismus ausgebildet ist, der dazu eingerichtet ist, das Flugzeugkomponentenmontagesystem (10; 10'; 10") mit der Flugzeugstruktur (40) zu verriegeln, wenn sich das Flugzeugkomponentenmontagesystem (10; 10', 10") in der gewünschten Position relativ zur Flugzeugstruktur (40) befindet.

4. Flugzeugkomponentenmontagesystem nach einem der Ansprüche 1 bis 3, **dadurch gekennzeichnet, dass** an dem Rahmenelement (12; 12'; 12") mindestens eine Krafteinleitungsvorrichtung (18) zum Anbringen des Rahmenelements (12; 12'; 12") an einem Spant (44) der Flugzeugstruktur (40) ausgebildet ist und/oder dass die erste Führungseinrichtung (46) eine sich von dem Verbindungselement (32) erstreckende Führungsschiene (48) umfasst, die dazu eingerichtet ist, mit einer in Querträgern (42) der Flugzeugstruktur (40) vorgesehenen Aufnahme (54) der zweiten Führungseinrichtung (52) zusammenzuwirken.

5. Flugzeugkomponentenmontagesystem nach einem der Ansprüche 1 bis 4, **dadurch gekennzeichnet, dass** die erste und/oder die zweite Führungseinrichtung (46, 52) eine Einrichtung (56) zur akustischen Entkopplung des Flugzeugkomponentenmontagesystems (10; 10'; 10") von der Flugzeugstruktur (40) umfasst/umfassen.

6. Flugzeugkomponentenmontagesystem nach einem der Ansprüche 1 bis 5, **dadurch gekennzeichnet, dass** an dem Flugzeugkomponentenmontagesystem (10; 10') mindestens eine erste Schnittstelle vorgesehen ist, die an mindestens eine an dem Flugzeugkomponentenmontagesystem (10; 10'; 10") befestigte elektrische Leitung angeschlossen und elektrisch mit einer zu der ersten Schnittstelle komplementären zweiten Schnittstelle verbindbar ist, wenn sich das Flugzeugkomponentenmontagesystem (10; 10'; 10") in der gewünschten Position relativ zur Flugzeugstruktur (40) befindet.

7. Flugzeugkomponentenmontagesystem nach einem der Ansprüche 1 bis 6, **dadurch gekennzeichnet, dass** ein erster Anschluss einer an dem Flugzeugkomponentenmontagesystem (10; 10'; 10") befestigten und/oder in das Flugzeugkomponentenmontagesystem (10; 10'; 10") integrierten Rohrleitung mit einem zu dem ersten Anschluss komplementären zweiten Anschluss verbindbar ist, wenn sich das Flugzeugkomponentenmontagesystem (10; 10'; 10") in der gewünschten Position relativ zur Flugzeugstruktur (40) befindet.

8. Flugzeugkomponentenmontagesystem nach einem der Ansprüche 1 bis 7, **dadurch gekennzeichnet, dass** mindestens eine Strebe (14, 16, 20, 22, 24, 26, 28, 30; 14', 20', 22', 24', 26', 28') des Rahmenelements (12; 12'; 12") hohlzylindrisch ausgebildet ist.

9. Flugzeugkomponentenmontagesystem nach einem der Ansprüche 1 bis 8, **gekennzeichnet durch** eine weitere Befestigungsvorrichtung zur Befestigung eines Isolationspakets an dem Rahmenelement (12; 12'; 12") und/oder dem Verbindungselement (32).

10. Flugzeugkomponentenmontagesystem nach einem der Ansprüche 1 bis 9, **dadurch gekennzeichnet, dass** das Rahmenelement (12; 12'; 12") mindestens einen Verschwenkmechanismus (58) umfasst, der ein Verschwenken eines ersten Abschnitts des Rahmenelements (12; 12'; 12") relativ zu einem zweiten Abschnitt des Rahmenelements (12; 12'; 12") ermöglicht.

11. Verfahren zur Montage einer Interieurkomponente, einer Rohrleitung und/oder einer elektrischen Leitung in einem Flugzeug mit den Schritten:
- Bereitstellen eines Flugzeugkomponentenmontagesystems (10; 10'; 10") nach einem der Ansprüche 1 bis 10,
- Befestigen der Interieurkomponente, der Rohrleitung und/oder der elektrischen Leitung an dem Rahmenelement (12; 12'; 12") und/oder dem Verbindungselement (32) des Flugzeugkomponentenmontagesystems (10; 10'; 10"),
- Verbinden der an dem Rahmenelement (12; 12'; 12") und/oder dem Verbindungselement (32) des Flugzeugkomponentenmontagesystems (10; 10'; 10") vorgesehenen ersten Führungseinrichtung (46) mit der an der Flugzeugstruktur (40) vorgesehenen und zu der ersten Führungseinrichtung (46) komplementären zweiten Führungseinrichtung (52) und
- Verschieben des Flugzeugkomponentenmontagesystems (10; 10'; 10") relativ zur Flugzeugstruktur (40), bis sich das Flugzeugkomponentenmontagesystem (10; 10'; 10") in einer gewünschten Position relativ zur Flugzeugstruktur (40) befindet.

12. Verfahren nach Anspruch 11,
**dadurch gekennzeichnet, dass** das Flugzeugkomponentenmontagesystem (10; 10'; 10") in der gewünschten Position an der Flugzeugstruktur (40) fixiert wird.

13. Verfahren nach Anspruch 11 oder 12,
**dadurch gekennzeichnet, dass** die an dem Flugzeugkomponentenmontagesystem (10; 10'; 10") vorgesehene erste Schnittstelle elektrisch mit der zu der ersten Schnittstelle komplementären zweiten Schnittstelle verbunden wird, wenn sich das Flugzeugkomponentenmontagesystem (10; 10'; 10") in der gewünschten Position relativ zur Flugzeugstruktur (40) befindet.

14. Verfahren nach einem der Ansprüche 11 bis 13,
**dadurch gekennzeichnet, dass** der erste Anschluss der an dem Flugzeugkomponentenmontagesystem (10; 10'; 10") befestigten und/oder in das Flugzeugkomponentenmontagesystem (10; 10'; 10") integrierten Rohrleitung mit dem zu dem ersten Anschluss komplementären zweiten Anschluss verbunden wird, wenn sich das Flugzeugkomponentenmontagesystem (10; 10'; 10") in der gewünschten Position relativ zur Flugzeugstruktur (40) befindet.

15. Verfahren nach einem der Ansprüche 11 bis 14,
**dadurch gekennzeichnet, dass** vor dem Verbinden der an dem Rahmenelement (12; 12'; 12") und/oder dem Verbindungselement (32) des Flugzeugkomponentenmontagesystems (10; 10'; 10") vorgesehenen ersten Führungseinrichtung (46) mit der an der Flugzeugstruktur (40) vorgesehenen und zu der ersten Führungseinrichtung (46) komplementären zweiten Führungseinrichtung (52) ein Isolationspaket an dem Rahmenelement (12; 12'; 12") und/oder dem Verbindungselement (32) des Flugzeugkomponentenmontagesystems (10; 10'; 10") befestigt wird.

## Claims

1. Aircraft component assembly system (10; 10'; 10") for use in the assembly of an interior component, a pipe and/or an electric line in an aircraft, comprising:
- at least one arc-shaped frame element (12; 12'; 12"), which comprises a plurality of longitudinal struts (14, 16) that are disposed at least in sections substantially parallel to one another,
- a connection element (32) that extends between a first and a second end of the frame element (12; 12'; 12") and is devised, in the assembled state of the aircraft component assembly system in an aircraft, to form an element of a floor of a cabin of the aircraft,
- a fastening apparatus for fastening the interior component, the pipe and/or the electric line to the frame element (12; 12'; 12") and/or the connection element (32), and
- a first guide device (46) that is provided on the frame element (12; 12'; 12") and/or the connection element (32) and is devised to interact with a second guide device (52), which is complementary to the first guide device (46) and provided on an aircraft structure (40), in such a way that the aircraft component assembly system (10; 10'; 10") is connectable to the aircraft structure (40) in a manner displaceable relative to the aircraft structure (40).

2. Aircraft component assembly system according to claim 1,
**characterized by** a fixing device that is devised to fix the aircraft component assembly system (10; 10'; 10") in a desired position on the aircraft structure (40).

3. Aircraft component assembly system according to claim 2,
**characterized in that** the fixing device takes the form of a detent mechanism that is devised to interlock the aircraft component assembly system (10; 10'; 10") with the aircraft structure (40) when the aircraft component assembly system (10; 10'; 10") is situated in the desired position relative to the aircraft structure (40).

4. Aircraft component assembly system according to one of claims 1 to 3, **characterized in that** on the frame element (12; 12'; 12") at least one force introduction apparatus (18) is formed for fitting the frame element (12; 12'; 12") on a rib (44) of the aircraft structure (40) and/or that the first guide device (46) comprises a guide rail (48), which extends from the connection element (32) and is devised to interact with a receiver (54) of the second guide device (52) that is provided in crossmembers (42) of the aircraft structure (40).

5. Aircraft component assembly system according to one of claims 1 to 4, **characterized in that** the first and/or the second guide device (46, 52) comprise/comprises a device (56) for the acoustic decoupling of the aircraft component assembly system (10; 10'; 10") from the aircraft structure (40).

6. Aircraft component assembly system according to one of claims 1 to 5, **characterized in that** on the aircraft component assembly system (10; 10'; 10") at least one first interface is provided, which is connected to at least one electric line fastened to the aircraft component assembly system (10; 10'; 10") and is electrically connectable to a second interface, which is complementary to the first interface, when the aircraft component assembly system (10; 10'; 10") is situated in the desired position relative to the aircraft structure (40).

7. Aircraft component assembly system according to one of claims 1 to 6, **characterized in that** a first connector of a pipe, which is fastened to the aircraft component assembly system (10; 10'; 10") and/or integrated into the aircraft component assembly system (10; 10'; 10"), is connectable to a second connector, which is complementary to the first connector, when the aircraft component assembly system (10; 10'; 10") is situated in the desired position relative to the aircraft structure (40).

8. Aircraft component assembly system according to one of claims 1 to 7, **characterized in that** at least one strut (14, 16, 20, 22, 24, 26, 28, 30; 14', 20', 22', 24', 26', 28') of the frame element (12; 12'; 12") is of a hollow-cylindrical construction.

9. Aircraft component assembly system according to one of claims 1 to 8, **characterized by** a further fastening apparatus for fastening an insulation package to the frame element (12; 12'; 12") and/or the connection element (32).

10. Aircraft component assembly system according to one of claims 1 to 9, **characterized in that** the frame element (12; 12'; 12") comprises at least one pivot mechanism (58) that enables a first portion of the frame element (12; 12'; 12") to pivot relative to a second portion of the frame element (12; 12'; 12").

11. Method of assembling an interior component, a pipe and/or an electric line in an aircraft, comprising the steps:
- providing an aircraft component assembly system (10; 10'; 10") according to one of claims 1 to 10,
- fastening the interior component, the pipe and/or the electric line to the frame element (12; 12'; 12") and/or the connection element (32) of the aircraft component assembly system (10; 10'; 10"),
- connecting the first guide device (46) provided on the frame element (12; 12'; 12") and/or the connection element (32) to the second guide device (52), which is complementary to the first guide device (46) and provided on the aircraft structure (40), and
- displacing the aircraft component assembly system (10; 10'; 10") relative to the aircraft structure (40) until the aircraft component assembly system (10; 10'; 10") is situated in a desired position relative to the aircraft structure (40).

12. Method according to claim 11,
**characterized in that** the aircraft component assembly system (10; 10'; 10") is fixed in the desired position on the aircraft structure (40).

13. Method according to claim 11 or 12,
**characterized in that** the first interface provided on the aircraft component assembly system (10; 10'; 10") is electrically connected to the second interface, which is complementary to the first interface, when the aircraft component assembly system (10; 10'; 10") is situated in the desired position relative to the aircraft structure (40).

14. Method according to one of claims 11 to 13,
**characterized in that** the first connector of the pipe, which is fastened to the aircraft component assembly system (10; 10'; 10") and/or integrated into the aircraft component assembly system (10; 10'; 10"), is connected to the second connector, which is complementary to the first connector, when the aircraft component assembly system (10; 10'; 10") is situated in the desired position relative to the aircraft structure (40).

15. Method according to one of claims 11 to 14,
**characterized in that** prior to connecting of the first guide device (46) provided on the frame element (12; 12'; 12") and/or the connection element (32) of the aircraft component assembly system (10; 10'; 10") to the second guide device (52) that is complementary to the first guide device (46) and provided on the aircraft structure (40), an insulation package is fastened to the frame element (12; 12'; 12") and/or the connection element (32) of the aircraft component assembly system (10; 10'; 10").

## Revendications

1. Système de montage d'éléments d'avion (10, 10', 10") pour le montage d'un élément intérieur, d'une conduite et/ou d'une ligne électrique dans un avion, comprenant
- au moins un élément de cadre (12, 12', 12") conçu sous la forme d'un arc et comprenant une pluralité de bras longitudinaux (14, 16) disposés pour le moins par endroits pour l'essentiel parallèlement les uns par rapport aux autres,
- un élément de liaison (32) qui s'étend entre une première et une deuxième extrémité de l'élément de cadre (12, 12', 12") et est conçu pour former, dans un état monté dans l'avion du système de montage d'éléments d'avion, un élément de sol d'une cabine d'avion,
- un dispositif de fixation pour fixer l'élément intérieur, la conduite et/ou la ligne électrique à l'élément de cadre (12, 12', 12") et/ou à l'élément de liaison (32), et
- un premier dispositif de guidage (46) prévu sur l'élément de cadre (12, 12', 12") et/ou sur l'élément de liaison (32) et conçu pour coopérer avec un deuxième dispositif de guidage (52) prévu sur une structure d'avion (40) et complémentaire du premier dispositif de guidage (46), de telle sorte que le système de montage d'éléments d'avion (10, 10', 10") peut être assemblé à la structure d'avion (40) et déplacé en translation par rapport à la structure d'avion (40).

2. Système de montage d'éléments d'avion selon la revendication 1,
**caractérisé par** un dispositif de fixation conçu pour fixer le système de montage d'éléments d'avion (10, 10', 10") dans une position souhaitée à la structure d'avion (40).

3. Système de montage d'éléments d'avion selon la revendication 2,
**caractérisé en ce que** le dispositif de fixation est réalisé sous la forme d'un mécanisme de blocage conçu pour verrouiller le système de montage d'éléments d'avion (10, 10', 10") avec la structure d'avion (40) lorsque le système de montage d'éléments d'avion (10, 10', 10") se trouve dans la position souhaitée par rapport à la structure d'avion (40).

4. Système de montage d'éléments d'avion selon l'une des revendications 1 à 3, **caractérisé en ce qu'**il est formé sur l'élément de cadre (12, 12', 12") au moins un dispositif d'introduction de force (18) pour monter l'élément de cadre (12, 12', 12") sur un couple (44) de la structure d'avion (40) et/ou **en ce que** le premier dispositif de guidage (46) comprend un rail de guidage (48) qui s'étend depuis l'élément de liaison (32) et est conçu pour coopérer avec un logement (54) du deuxième dispositif du guidage (52), prévu dans les poutres transversales (42) de la structure d'avion (40).

5. Système de montage d'éléments d'avion selon l'une des revendications 1 à 4, **caractérisé en ce que** le premier et/ou le deuxième dispositif de guidage (46, 52) comprend/comprennent un dispositif (56) pour le désaccouplement acoustique entre le système de montage d'éléments d'avion (10, 10', 10") et la structure d'avion (40).

6. Système de montage d'éléments d'avion selon l'une des revendications 1 à 5, **caractérisé en ce qu'**il est prévu sur le système de montage d'éléments d'avion (10, 10') au moins une première interface qui est raccordée à au moins une conduite électrique fixée au système de montage d'éléments d'avion (10,10', 10") et peut être reliée électriquement à une deuxième interface complémentaire de la première interface lorsque le système de montage d'éléments d'avion (10, 10', 10") se trouve dans la position souhaitée par rapport à la structure d'avion (40).

7. Système de montage d'éléments d'avion selon l'une des revendications 1 à 6, **caractérisé en ce qu'**un premier raccordement d'une conduite fixée sur le système de montage d'éléments d'avion (10,10', 10") et/ou intégrée dans le système de montage d'éléments d'avion (10,10', 10") peut être relié à un deuxième raccordement complémentaire du premier raccordement lorsque le système de montage d'éléments d'avion (10, 10', 10") se trouve dans la position souhaitée par rapport à la structure d'avion (40).

8. Système de montage d'éléments d'avion selon l'une des revendications 1 à 7, **caractérisé en ce qu'**au moins un bras (14, 16, 20, 22, 24, 26, 28, 30, 14', 20', 22' 24', 26', 28') de l'élément de cadre (12, 12', 12") est réalisé sous la forme d'un cylindre creux.

9. Système de montage d'éléments d'avion selon l'une des revendications 1 à 8, **caractérisé par** un dispositif de fixation supplémentaire pour la fixation d'un paquet isolant à l'élément de cadre (12, 12', 12") et/ou à l'élément de liaison (32).

10. Système de montage d'éléments d'avion selon l'une des revendications 1 à 9, **caractérisé en ce que** l'élément de cadre (12,12', 12") comprend au moins un mécanisme de pivotement (58) qui permet le pivotement d'un premier segment de l'élément de cadre (12, 12', 12") par rapport à un deuxième segment de l'élément de cadre (12, 12', 12").

11. Procédé pour le montage d'un élément intérieur, d'une conduite et/ou d'une ligne électrique dans un avion, comprenant pour étapes :
- la mise à disposition d'un système de montage d'éléments d'avion (10, 10', 10") selon une des revendications 1 à 10,
- la fixation de l'élément intérieur, de la conduite et/ou de la ligne électrique à l'élément de cadre (12, 12', 12') et/où à l'élément de liaison (32) du système de montage d'éléments d'avion (10,10', 10"),
- l'assemblage du premier dispositif de guidage (46) prévu sur l'élément de cadre (12, 12', 12") et/ou sur l'élément de liaison (32) du système de montage d'éléments d'avion (10, 10', 10") au deuxième dispositif de guidage (52) prévu sur la structure d'avion (40) et complémentaire du premier dispositif de guidage (46) et
- le déplacement en translation du système de montage d'éléments d'avion (10,10', 10") par rapport à la structure d'avion (40) jusqu'à ce que le système de montage d'éléments d'avion (10, 10', 10") se trouve dans une position souhaitée par rapport à la structure d'avion (40).

12. Procédé selon la revendication 11,
**caractérisé en ce que** le système de montage d'éléments d'avion (10, 10', 10") est fixé dans la position souhaitée à la structure d'avion (40).

13. Procédé selon la revendication 11 ou 12,
**caractérisé en ce que** la première interface prévue sur le système de montage d'éléments d'avion (10, 10', 10") est reliée électriquement à la deuxième interface complémentaire de la première interface lorsque le système de montage d'éléments d'avion (10, 10', 10") se trouve dans la position souhaitée par rapport à la structure d'avion (40).

14. Procédé selon l'une des revendications 11 à 13,
**caractérisé en ce que** le premier raccordement de la conduite fixée au système de montage d'éléments d'avion (10, 10', 10") et/ou intégrée dans le système de montage d'éléments d'avion (10, 10', 10") peut être assemblé au deuxième raccordement complémentaire au premier raccordement lorsque le système de montage d'éléments d'avion (10, 10', 10") se trouve dans la position souhaitée par rapport à la structure d'avion (40).

15. Procédé selon l'une des revendications 11 à 14,
**caractérisé en ce qu'**un paquet isolant est fixé à l'élément de cadre (12, 12', 12') et/ou à l'élément de liaison (32) du système de montage d'éléments d'avion (10, 10', 10") avant assemblage du premier dispositif de guidage (46) prévu sur l'élément de cadre (12, 12', 12") et/ou sur l'élément de liaison (32) du système de montage d'éléments d'avion (10, 10', 10') au deuxième dispositif de guidage (52) prévu sur la structure d'avion (40) et complémentaire du premier dispositif de guidage (46).
